# EUROPÄISCHE PATENTSCHRIFT

(11) **EP 3 117 487 B1**
(45) Veröffentlichungstag und Bekanntmachung des Hinweises auf die Patenterteilung: **04.11.2020**
(21) Anmeldenummer: 15704291.2
(22) Anmeldetag: 10.02.2015
(51) Int. Cl.: H01R 4/2429, H01R 9/24, H01R 9/26, H04M 1/74

(54) **ÜBERSPANNUNGSSCHUTZEINRICHTUNG MIT MINDESTENS EINEM ÜBERSPANNUNGSSCHUTZGERÄT**
SURGE PROTECTION DEVICE WITH AT LEAST ONE SURGE PROTECTION UNIT
DISPOSITIF DE PROTECTION CONTRE LES SURTENSIONS COMPRENANT AU MOINS UN APPAREIL DE PROTECTION CONTRE LES SURTENSIONS

(30) Priorität: 13.03.2014 DE 102014003693; 19.05.2014 DE 102014007352
(43) Veröffentlichungstag der Anmeldung: 18.01.2017
(73) Patentinhaber: DEHN SE + Co KG, 92318 Neumarkt / Opf. (DE)
(72) Erfinder: SEITZ, Thomas, 92358 Seubersdorf (DE); ZAHLMANN, Peter, 92318 Neumarkt (DE)
(74) Vertreter: Kruspig, Volkmar
(86) Internationale Anmeldenummer: PCT/EP2015/052717
(87) Internationale Veröffentlichungsnummer: WO 2015/135709

(56) Entgegenhaltungen:
- EP-A1- 0 498 151
- EP-A1- 2 280 466
- EP-A2- 0 637 853
- EP-A2- 0 667 650
- WO-A1-92/15127
- WO-A1-2013/164330
- DE-A1- 3 917 270
- US-A- 5 802 170
- "Produktdatenblatt: DEHNgap", , 27. September 2013 (2013-09-27), XP055188733, Gefunden im Internet: URL:http://www.dehn.de/pdbRes/DE_DE_Web/47 7/31222/Artikelnummer-pdf/31232/961102.pdf [gefunden am 2015-05-12] in der Anmeldung erwähnt
- "LSA-PLUS Series 2 Connection and Disconnection Modules and Accessories", , 31. August 2011 (2011-08-31), XP055189059, Gefunden im Internet: URL:http://docs-europe.electrocomponents.c om/webdocs/1306/0900766b81306138.pdf [gefunden am 2015-05-13] in der Anmeldung erwähnt
- Anonymous: "Earthing system - Wikipedia, the free encyclopedia", , 8. März 2014 (2014-03-08), XP055189068, Gefunden im Internet: URL:http://en.wikipedia.org/w/index.php?ti tle=Earthing_system&oldid=598736606 [gefunden am 2015-05-13]

## Beschreibung

Die Erfindung betrifft eine Überspannungsschutzeinrichtung mit mindestens einem Überspannungsschutzgerät, bestehend aus einem im Wesentlichen U-förmigen Sockelteil und einem, im Sockelteil fixierbaren Steckteil, welches Mittel zum Überspannungsschutz aufnimmt, wobei am oder im Sockelteil isolierte elektrische Leiter mittels Vampir- oder Schneidklemmen kontaktiert werden, sowie im Sockelteil Öffnungen oder Durchbrüche zur Leiteraufnahme ausgebildet sind, gemäß Oberbegriff den Ansprüchen 1 und 2.

Überspannungsschutzeinrichtungen, bestehend aus einem Sockel- oder Basisteil, welches z.B. zur Hutschienenmontage geeignet ist und das die eigentlichen Überspannungsschutzgeräte in Form von Steckteilen aufnimmt, gehören seit vielen Jahren zum Stand der Technik. Verwiesen sei hier auf die aktuellen Überspannungsschutzgeräte der Firm DEHN + SÖHNE GmbH + Co. KG, Neumarkt/Oberpfalz unter www.dehn.de.

Derartige Überspannungsschutzgeräte werden, wie bereits erwähnt, unter Rückgriff auf Hutschienen in örtlichen Versorgungsnetzen eingesetzt und in diesbezügliche Anschlusskästen montiert und elektrisch kontaktiert. Die Kontaktierung der entsprechenden Leiter kann über sogenannte Käfig-Schraubklemmen erfolgen. Diesbezüglich müssen die Leiteradern einzeln bearbeitet, abisoliert und mechanisch geklemmt werden.

Sogenannte Kammschienen ermöglichen einen schnelleren Anschluss in der Schraubklemmtechnik. Bei einer V-Verdrahtung ist weiteres Zubehör notwendig. Die bisher bekannte Anverdrahtung in mehreren einzelnen Arbeitsgängen ist jedoch zeitaufwendig und es besteht die Gefahr, dass bei der individuellen Verdrahtung Verdrahtungsfehler resultieren, die eine Nacharbeit erfordern.

Im Bereich des Aufbaus von Telekommunikationsnetzwerken wird in großem Umfang die sogenannte Schnellanschlusstechnik verwendet. Hierbei kann ein löt-, schraub- und abisolierfreies Anschalten von Kabeladern mittels multifunktionalem Anlegewerkzeug erfolgen. Einzelheiten zur Schneid-Klemm-Schnellanschlusstechnik können der Produktbroschüre der ADC Krone GmbH, Inside LSA-PLUS entnommen werden.

Weiterhin ist aus der DE 39 17 270 C2 eine Anschlussleiste mit Überspannungsschutz vorbekannt. Die Anschlussleiste umfasst zwei Reihen von Schneid-Klemm-Kontakten zum Anschluss von isolierten Kabeladern, insbesondere Kabeln für die Fernmelde- und Datentechnik. Weiterhin ist ein mit der Anschlussleiste verbindbares Überspannungsableitermagazin vorhanden. Die Reihen der Schneid-Klemm-Kontakte sind auf verschiedenen Seiten der Anschlussleiste angeordnet. Ein Schneid-Klemm-Kontakt der ersten Reihe wird über ein Verbindungselement mit einem Schneid-Klemm-Kontakt der zweiten Reihe verbunden. Das Überspannungsableitermagazin ist seitlich mittig zwischen den beiden Reihen der Schneid-Klemm-Kontakte angeordnet. Mit einer solchen Lösung kann eine Anschlussleiste geschaffen werden, welche ein Be- und Entschalten und ein Prüfen und Testen angeschlossener Kabeladern auch bei eingesetztem Überspannungsschutz zulässt.

Eine Weiterbildung des vorstehend erläuterten Standes der Technik findet sich in der EP 0 667 650 B1, die ebenfalls ein Anschlusssystem für die Nachrichten- und Datentechnik zeigt und wobei auch dort auf die Schneid-Klemm-Anschlusstechnik verwiesen wird.

Weiterhin offenbart die WO 2013/164330 A1 eine Kabelclip-Vorrichtung für die sogenannte Modulelektronik. Die dortige Vorrichtung geht von einem mehrteiligen Gehäuse und einer elektronischen Schaltung aus, die im Gehäuse befindlich ist und welche Anschlusseinrichtungen zum Anschluss der elektrischen Schaltung an einen Leistungsstrom von einem Solarmodul führende, mit Isolierungen versehene Leitungen aufweist. Zumindest eine Komponente der elektrischen Schaltung ist dem Solarmodul parallel geschaltet. Weiterhin sind Teile des Gehäuses um die mit ihren Isolierungen durchlaufenden Leitungen zusammenfügbar. Die Anschlusseinrichtungen weisen Penetrationselemente auf, die beim Zusammenfügen der Teile des Gehäuses die Isolierungen durchdringen und die Leitungen elektrisch kontaktieren. Die dortige Schneid-Klemmen-Technik mit den ausgebildeten Penetrationselementen ist so realisiert, dass sie durch das Zusammenfügen der Teile des Gehäuses unmittelbar aktiviert werden kann, ohne dass es der Anwendung spezieller Werkzeuge bedarf. Die Penetrationselemente trennen beim Zusammenfügen des vorerwähnten Gehäuses die Isolierung der Leitungen auf und stellen durch ein ausreichendes Einschneiden in den Leitungsquerschnitt eine elektrische Kontaktierung mit ausreichender Stromtragfähigkeit sicher.

Dokument EP 0637853 A2 offenbart die technischen Merkmale, die im Oberbegriff den Ansprüchen 1 und 2 definiert sind.

Aus dem Vorgenannten ist es Aufgabe der Erfindung, eine weiterentwickelte Überspannungsschutzeinrichtung mit mindestens einem Überspannungsschutzgerät, bestehend aus einem Sockelteil und einem, im Sockelteil fixierbaren Steckteil, welches Mittel zum Überspannungsschutz aufweist, anzugeben, die universell einsetzbar für alle Netzsysteme, nämlich TT-/TNS- oder TNC-Systeme ist und bei der das Sockelteil ohne Schraub-Klemm-Technik aufbaubar ist. Das sogenannte Anverdrahten soll in einfacher und sicherer Weise, auch bei einer V-Verdrahtung realisierbar sein. Eine weitere Aufgabe der zu schaffenden Einrichtung ist es, eine sichere Kontaktierung auch bei Leitern mit unterschiedlichem Querschnitt zu gewährleisten, so dass insgesamt die Betriebssicherheit und die Langzeitzuverlässigkeit erhöht sind.

Die Lösung der Aufgabe der Erfindung erfolgt durch die Merkmalskombination der nebengeordneten Ansprüche 1 oder 2, wobei die Unteransprüche mindestens zweckmäßige Ausgestaltungen und Weiterbildungen darstellen.

Es wird demnach von einer Überspannungsschutzeinrichtung mit mindestens einem Überspannungsschutzgerät ausgegangen. Das Überspannungsschutzgerät besteht aus einem im Wesentlichen U-förmigen Sockelteil und einem, im Sockelteil fixierbaren Steckteil und gegebenenfalls auch mehreren einzelnen Steckteilen. Das oder die Steckteile weisen Mittel zum Überspannungsschutz auf. Dies können Varistoren, Funkenstrecken oder dergleichen Mittel sein.

Am oder im Sockelteil werden isolierte elektrische Leiter mittels Vampir- oder Schneidklemmen kontaktiert. Weiterhin sind im Sockelteil Öffnungen oder Durchbrüche zur Leiteraufnahme ausgebildet.

Bezüglich des U-förmigen Sockelteils ist festzuhalten, dass dieses lediglich geeignet sein muss, ein Steckteil austauschbar, jedoch stoßstromfest zu fixieren und dessen Zugänglichkeit zu gewährleisten.

Erfindungsgemäß sind die im Sockelteil befindlichen Öffnungen wahlweise zum Einschieben oder Durchschieben der elektrischen Leiter ausgeführt. Die Öffnungen liegen in einem Bereich des Sockelteils, welcher später vom Steckteil überdeckbar ist, frei.

Gemäß einer ersten Ausführungsform der Erfindung werden die freiliegenden Leiterabschnitte von am Boden des Steckteils befindlichen Schneidflächen kontaktiert, und zwar dadurch, dass die Leiterisolation von den Schneidflächen durchdrungen wird.

Vorstehendes bedeutet, dass beim Einstecken des Steckteils sich die Schneidflächen durch die Leiterisolation hindurch bewegen und den metallischen Leiterkern kontaktieren. Über eine an sich bekannte Verrastung des oder der Steckteile im Sockelteil bleibt die erforderliche Krafteinwirkung zur sicheren Kontaktierung, welche stoßstromfest ist, erhalten.

Bei einer zweiten Ausführungsform der Erfindung sind in das Sockelteil eine Rastplatte oder mehrere Raststege einsetzbar. Die Rastplatte oder die Raststege können Bestandteil des Sockelteils sein, d.h. mit diesem zusammen ausgeliefert und vormontiert werden. In der Ausgangsposition befinden sich die Rastplatte oder die Raststege in einer solchen Lage, die es gestattet, durch die Öffnungen im Sockelteil die entsprechenden Leiter einzuschieben bzw. bei V-Verdrahtung durchzuschieben.

Die Rastplatte und/oder die Raststege weisen zum Steckteil weisende Kontaktflächen sowie zu den Leitern gerichtete Schneidflächen auf, und zwar derart, dass beim Einpressen oder Einrasten die Schneidflächen die Leiterisolation durchdringen und die jeweiligen Leiter kontaktieren, so dass zwischen den jeweiligen Kontaktflächen und dem jeweiligen Leiter eine elektrische Verbindung hergestellt ist.

Das eigentliche Steckteil wird dann in die Vorkonstruktion aus Sockelteil mit Rastplatte und dort bereits kontaktierten Leitern eingesteckt und tritt über an seinem Boden befindliche Kontaktgegenflächen mit den Kontaktflächen des Steckteils in elektrische Verbindung.

Bei einer Ausgestaltung der Erfindung besitzt das Steckteil an seinem Boden leitfähige Abschnitte, welche in Lage und Richtung mit den Kontaktflächen der Rastplatte oder den Raststegen korrespondieren. Diese leitfähigen Abschnitte wurden vorstehend als Kontaktgegenflächen bezeichnet.

Im Sockelteil ist ein Aufnahmehohlraum für eine Leiteradernplatte vorgesehen, die üblicherweise aus isolierendem Material, z.B. einem Kunststoffmaterial besteht.

Die Leiteradernplatte weist eine der Leiteranzahl entsprechende Ausbildung von rinnenartigen Ausnehmungen auf. Der Querschnitt der rinnenartigen Ausnehmungen kann z.B. einem Kreissegment entsprechen, U-förmig oder V-förmig oder ähnlich ausgeführt werden.

Die vorerwähnte Leiteradernplatte stützt den jeweiligen elektrischen Leiter beim Schneid-Klemm-Kontaktierungsvorgang ab, was zur Zuverlässigkeit der gewünschten elektrischen Verbindung maßgeblich beiträgt.

Die Leiteradernplatte kann bei einer bevorzugten Ausführungsform als Einsatzteil ausgebildet werden, wobei die rinnenartigen Ausnehmungen eine an den Leiterquerschnitt angepasste Form besitzen.

Hier wiederum bevorzugt ausgestaltend ist die Leiteradernplatte aus dem Aufnahmehohlraum entnehmbar und gewendet oder gedreht wieder einsetzbar, wobei eine erste Oberflächenseite der Leiteradernplatte Rinnen für Leiter mit einem ersten Querschnitt und eine zweite Oberflächenseite Rinnen für Leiter mit einem zweiten Querschnitt aufweist.

Bei dieser Variante können sich die Rinnenform und die Querschnitte der Leiter unterscheiden.

Es ist ergänzend denkbar, die Leiteradernplatte als Block mit einer quadratischen Querschnittsfläche auszubilden, wobei jede der Oberflächenseiten spezifische Rinnen für entsprechende Leiterdurchmesser besitzt, um eine noch weitergehende Multifunktionalität zu schaffen.

Die Erfindung soll nachstehend anhand von Ausführungsbeispielen sowie unter Zuhilfenahme von Figuren näher erläutert werden.

Hierbei zeigen:
Fig. 1 zeigt zwei Draufsichten auf das Vorderteil gemäß einer ersten Ausführungsform der Erfindung, einmal mit durchgeschleifter Verdrahtung (rechte Abbildung) und zum anderen mit einem an einer Frontseite verschlossenen Durchbruch für die Leiter. Bei der V-Verdrahtung werden die Leiter durch gegenüberliegende Durchbrüche hindurchgeschoben; beim Stich-Anschluss (linke Darstellung) lediglich eingeschoben;
Fig. 2 zeigt eine Draufsicht und einen Längsschnitt der erfindungsgemäßen Überspannungsschutzeinrichtung mit Detaildarstellung A längs der Linie A-A, aus der das Prinzip der Vampir-Schneidtechnik bzw. Vampir-Klemmtechnik erkennbar ist;
Fig. 3 nimmt Bezug auf die zweite Ausführungsform der Erfindung mit einem Sockelteil, das eine Rastplatte besitzt, das zum Steckteil weisende Kontaktflächen sowie zu den Leitern gerichtete Schneidflächen enthält.
Fig. 4 zeigt ein prinzipielles Steckteil, geeignet für einen Einsatz bei Verwendung des Unterteils gemäß Fig. 3.
Fig. 5 stellt einen Querschnitt durch das erfindungsgemäße Steckteil mit einer Leiteradernplatte dar, die rinnenförmige Ausnehmungen unterschiedlichen Durchmessers besitzt, um einen Anschluss von Adernquerschnitten unterschiedlicher Abmessungen zu gewährleisten.
Mit Hilfe der Fig. 6 und 7 ist als perspektivische Ansicht das Sockelteil mit aufgenommener Leiteradernplatte dargestellt, die bezüglich der Aufnahme von Leitern unterschiedlicher Querschnitte im Aufnahmehohlraum des Sockelteils gewendet eingesetzt werden kann.
Die Fig. 8 zeigt in Fortbildung der Fig. 6 und 7 die Rastplatte mit im Bild nach unten gerichteten Schneidflächen zur Kontaktierung der entsprechenden Leiter auf der Basis der Vampir-Schneid-Klemmtechnik.
Fig. 9 schließt an die Darstellung nach Fig. 8 an. Nach der mittels Pfeildarstellung nach Fig. 8 ausgeführten Bewegung rastet die Platte mit den Schneidklemmen in einer entsprechenden Ausnehmung in der Seitenwandung des Sockelteils ein und stellt die sichere Kontaktierung der ansonsten nicht abisolierten Leiter her.
Fig. 10 stellt die komplette Einheit aus Sockelteil mit Adernplatte und kontaktierten Leitern und Steckteil dar.

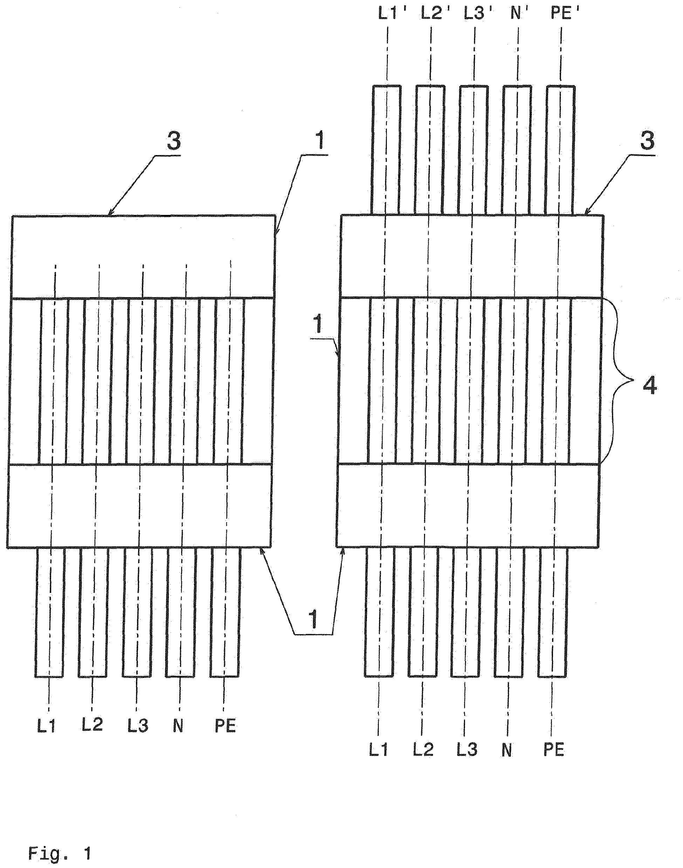

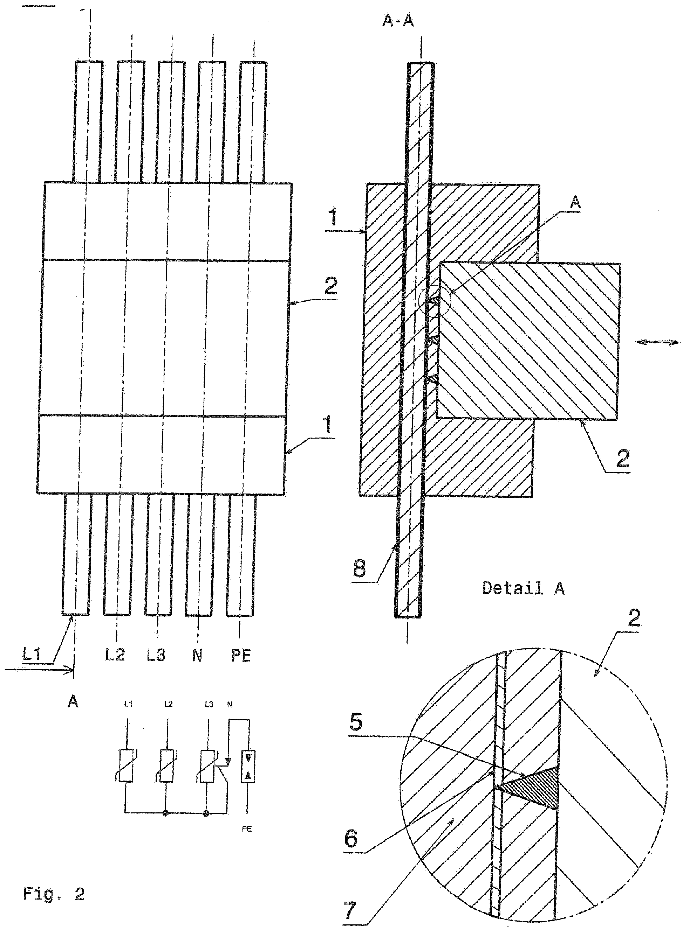

Gemäß den Prinzipdarstellungen nach den Fig. 1 und 2 wird gemäß der ersten Ausführungsform der Erfindung von einem Sockelteil 1 ausgegangen, das, wie die Querschnittsdarstellung gemäß Fig. 2, oben rechts, deutlich werden lässt, eine U-förmige Gestalt besitzt.

Im Sockelteil 1 ist ein Steckteil 2 rastend, aber austauschbar einbringbar.

Das Steckteil 2 weist Mittel zum Überspannungsschutz auf. Diese Mittel können z.B. Funkenstrecken, Varistoren oder dergleichen umfassen.

Im Sockelteil 1 werden elektrische Leiter L1, L2, L3, N, PE kontaktiert. Diesbezüglich sind stirnseitig Öffnungen oder Durchbrüche 3 vorhanden, die dem Einschieben oder Durchschieben der elektrischen Leiter L1, L2, L3, N und/oder PE dienen.

Die Darstellungen nach Fig. 1 lassen erkennen, dass die Leiter L1, L2, L3, N und PE in einem Bereich 4 des Sockelteils 1 freiliegen. Dieser Bereich 4 wird später vom Steckteil 2 überdeckt.

Am Boden des Steckteils 2 befindliche Schneidflächen 5 sind in der Lage, beim Einstecken des Steckteils 2 die Leiterisolation 6 zu durchdringen und den metallischen Kern 7 des betreffenden Leiters 8 zu kontaktieren.

Bei einem Stich-Anschluss können die vorerwähnten Öffnungen oder Durchbrüche 3 an einer Seite des Steckteils 2 verschlossen werden oder verschlossen bleiben.

Beim V-Anschluss sind beide Öffnungen an den gegenüberliegenden Seiten frei und insofern als Durchbruch gestaltet.

Über eine entsprechende Kontaktierung und Ausführung der Schneidflächen 5 am jeweiligen Steckteil 2 in Verbindung mit einem Wählschalter können die entsprechenden Netzsysteme TT-/TNS bzw. TNC gewählt werden, was in den Darstellungen nach Fig. 2 angedeutet ist.

Bei der zweiten Ausführung der Erfindung wird von einem universellen Sockelteil 11 ausgegangen, das wiederum über entsprechende Öffnungen 3 Leiter 8 aufnimmt.

Das Sockelteil 11 nimmt bei dieser Ausführungsform eine Rastplatte 12 mit Vampir- oder Schneid-Klemmtechnik zum Einrasten in das Sockelteil auf.

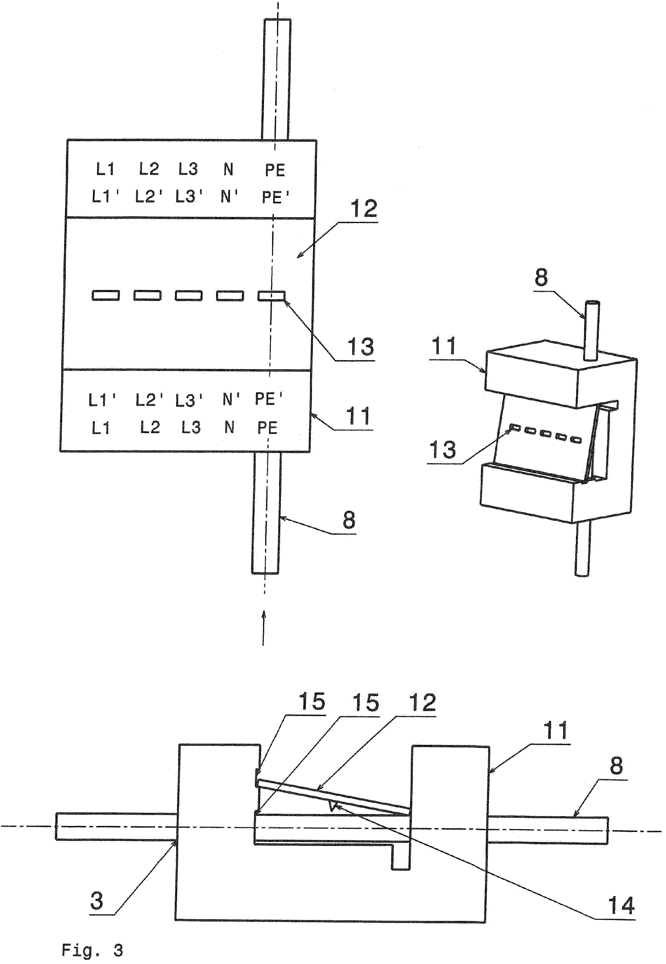

Diesbezüglich weist die Rastplatte 12 an ihrer Oberseite, d.h. an der zum in der Fig. 3 nicht gezeigten Steckteil gerichteten Fläche Kontaktflächen 13 auf.

Zu den Leitern 8 hin gerichtet weist die Rastplatte 12 Schneidflächen 14 auf, die beim Eindrücken oder Einpressen der Rastplatte 12 die Leiterisolierung durchdringen und den Leiterkern kontaktieren.

Diesbezüglich sind bei einer vormontierten Rastplatte 12 in einem der U-Schenkel des Sockelteils 11 Rastausnehmungen 15 vorhanden.

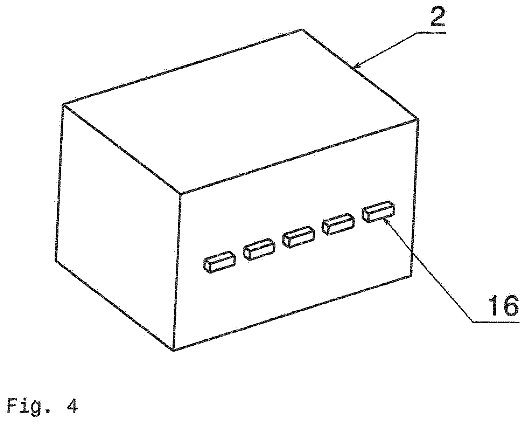

Beim späteren Einsetzen des für die zweite Ausführungsform spezifizierten Steckteils 2 (siehe Fig. 4) kontaktieren dort ausgebildete Kontaktgegenflächen 16 die Kontaktflächen 13.

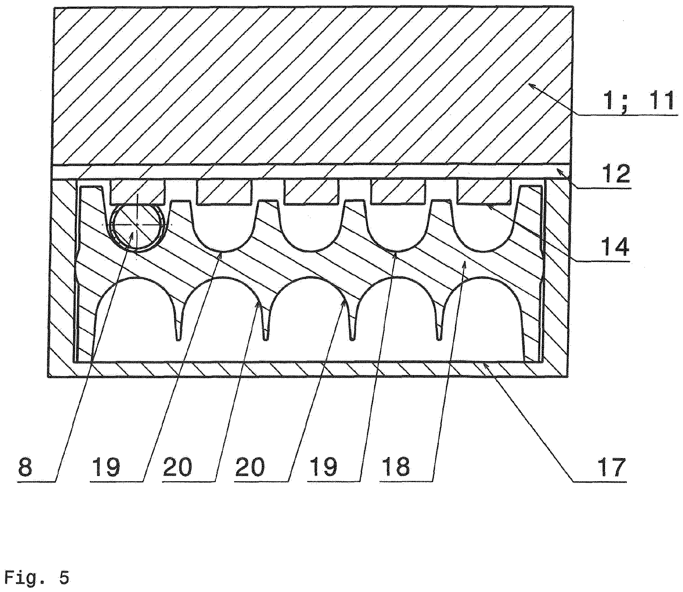

Die Fig. 5 ff. lassen darüber hinaus erkennen, dass im Sockelteil 1 bzw. 11 ein Aufnahmehohlraum 17 für eine Leiteradernplatte 18 vorgesehen ist.

Die Leiteradernplatte 18 weist eine der Leiteranzahl 8 entsprechende Ausbildung von rinnenartigen Ausnehmungen 19 auf.

Die Leiteradernplatte 18 ist als Einsatzteil ausgebildet und kann aus dem Aufnahmehohlraum 17 entnommen und gewendet wieder eingesetzt werden. Dabei können mit Hilfe der unterschiedlichen Formen der rinnenartigen Ausnehmungen 19 bzw. 20 auf den verschiedenen Seiten Leiter mit unterschiedlichen Querschnitten, z.B. 10/16 mm² oder 25/35 mm², aufgenommen werden.

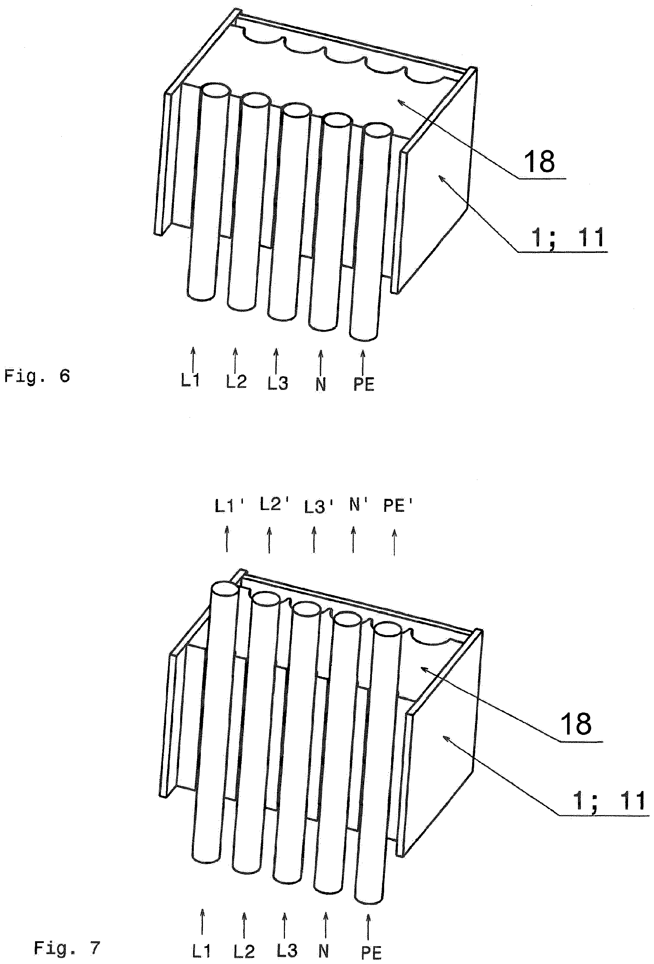

Die möglichen Ausgestaltungen der Verdrahtung nach Stichanschluss bzw. V-Anschluss sind in den Fig. 6 und 7 illustriert, wobei auch dort die Möglichkeit des Wendens der Adernplatte nachvollziehbar ist.

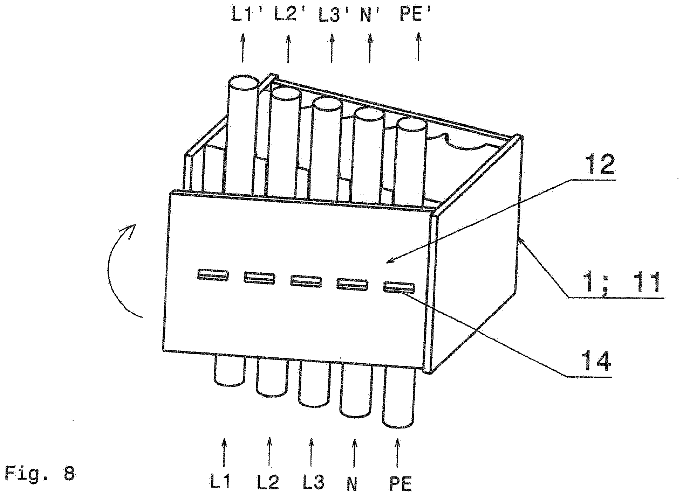

Der Vorgang des Vampir-Schneidklemm-Kontaktierens ist anhand der Fig. 8 nachvollziehbar, welche symbolisch die Kontaktplatte 12 zeigt, die an ihrer zu den Leitern L1, L2, L3, N und PE gerichteten Seite die entsprechenden Vampir-Schneidklemmen 14 umfasst und Fenster aufweist, die die Kontaktflächen 13 rückseitig von den jeweiligen Schneidklemmen bilden.

Die Pfeildarstellung symbolisiert die Schwenk-, Rast- und damit verbundene Schneid-Klemm-Kontaktierungsbewegung.

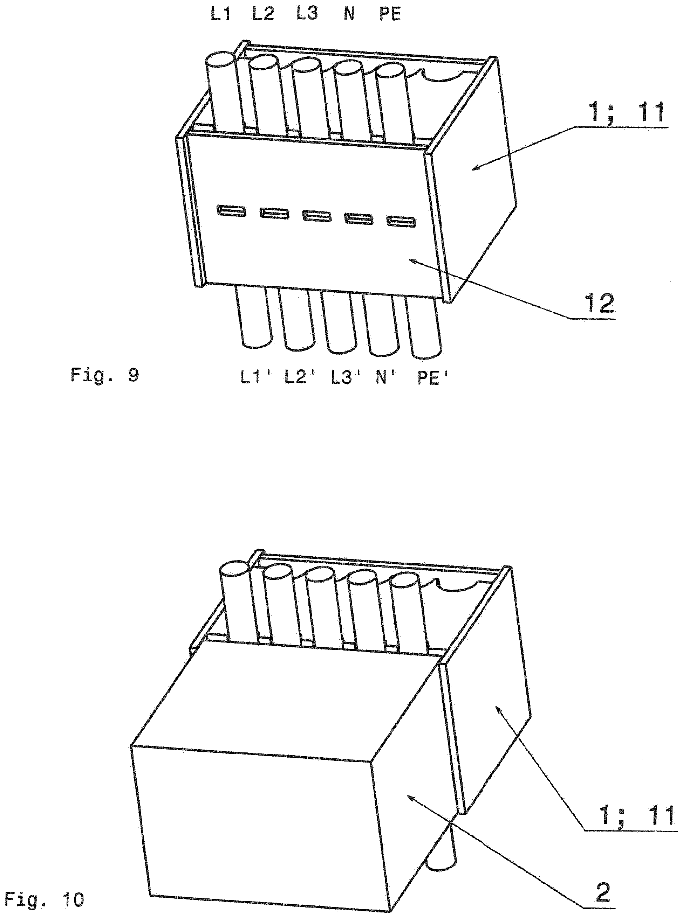

Die Fig. 9 stellt den Zustand nach eingerasteter Platte 12 dar, wobei nunmehr die gewünschte elektrische Kontaktierung der Leiter vorliegt.

In an sich bekannter Weise kann dann gemäß der Darstellung nach Fig. 10 das eigentliche Steckteil 2, ausgebildet als Schutzmodul, rastend mit dem Sockelteil 1; 11 verbunden werden.

## Patentansprüche

1. Überspannungsschutzeinrichtung mit mindestens einem Überspannungsschutzgerät, bestehend aus einem im Wesentlichen U-förmigen Sockelteil (1) und einem, im Sockelteil (1) fixierbaren Steckteil (2), welches Mittel zum Überspannungsschutz aufnimmt, wobei am oder im Sockelteil (1) isolierte elektrische Leiter (8) mittels Vampir- oder Schneidklemmen kontaktiert werden, sowie im Sockelteil (1) Durchbrüche (3) zur Leiteraufnahme ausgebildet sind, wobei die Durchbrüche (3) zum Einschieben im Falle eines Stich-Anschlusses oder Durchschieben im Falle eines V-Anschlusses der elektrischen Leiter (8) ausgeführt sind und in einem Bereich (4) des Sockelteils (1), welcher vom Steckteil (2) überdeckbar ist, freiliegen, derart, dass am Boden des Steckteils (2) befindliche Schneidflächen (5) die Leiterisolation (6) beim Steckvorgang durchdringen und den jeweiligen Leiter (8) unmittelbar kontaktieren, wobei bei einem Stich-Anschluss die Durchbrüche (3) an einer Seite des Steckteils (2) verschlossen werden und bei einem V-Anschluss die Durchbrüche an den gegenüberliegenden Seiten frei gestaltet sind, **dadurch gekennzeichnet, dass** im Sockelteil (1) ein Aufnahmehohlraum (17) für eine Leiteradernplatte (18) vorgesehen ist, wobei die Leiteradernplatte (18) eine der Leiteranzahl entsprechende Ausbildung von rinnenartigen Ausnehmungen (19) aufweist.

2. Überspannungsschutzeinrichtung mit mindestens einem Überspannungsschutzgerät, bestehend aus einem im Wesentlichen U-förmigen Sockelteil (1) und einem, im Sockelteil (1) fixierbaren Steckteil (2), welches Mittel zum Überspannungsschutz aufnimmt, wobei am oder im Sockelteil (1) isolierte elektrische Leiter (8) mittels Vampir- oder Schneidklemmen kontaktiert werden, sowie im Sockelteil (1) Durchbrüche (3) zur Leiteraufnahme ausgebildet sind, wobei die Durchbrüche (3) zum Einschieben im Falle eines Stich-Anschlusses oder Durchschieben im Falle eines V-Anschlusses der elektrischen Leiter (8) ausgeführt sind und in einem Bereich (4) des Sockelteils (1), welcher vom Steckteil (2) überdeckbar ist, freiliegen, wobei bei einem Stich-Anschluss die Durchbrüche (3) an einer Seite des Steckteils (2) verschlossen werden und bei einem V-Anschluss die Durchbrüche an den gegenüberliegenden Seiten frei gestaltet sind,
**dadurch gekennzeichnet dass**
das Sockelteil (1) eine Rastplatte (12) oder mehrere Raststege besitzt oder aufnimmt, welche zum Steckteil (2) weisende Kontaktflächen (13) sowie zu den Leitern (8) gerichtete Schneidflächen (14) aufweisen, derart, dass beim Einpressen oder Einrasten die Schneidflächen (14) die Leiterisolation (6) durchdringen und die jeweiligen Leiter (8) kontaktieren, so dass zwischen den jeweiligen Kontaktflächen (13) und dem jeweiligen Leiter (8) eine elektrische Verbindung hergestellt ist, und dass
im Sockelteil (1) ein Aufnahmehohlraum (17) für eine Leiteradernplatte (18) vorgesehen ist, wobei die Leiteradernplatte (18) eine der Leiteranzahl entsprechende Ausbildung von rinnenartigen Ausnehmungen (19) aufweist.

3. Überspannungsschutzeinrichtung nach Anspruch 2,
**dadurch gekennzeichnet, dass**
das Steckteil (2) an seinem Boden leitfähige Abschnitte (16) besitzt, welche in Lage und Richtung mit den Kontaktflächen (13) der Rastplatte (12) oder den Raststegen korrespondieren.

4. Überspannungsschutzeinrichtung nach Anspruch 1 oder 2,
**dadurch gekennzeichnet, dass**
die Leiteradernplatte (18) die jeweiligen elektrischen Leiter (8) beim Schneid-Klemm-Kontaktierungsvorgang abstützt.

5. Überspannungsschutzeinrichtung nach Anspruch 1, 2 oder 4,
**dadurch gekennzeichnet, dass**
die Leiteradernplatte (18) als Einsatzteil ausgebildet ist und die rinnenartigen Ausnehmungen (19) eine an den Leiterquerschnitt angepasste Form besitzen.

6. Überspannungsschutzeinrichtung nach Anspruch 5,
**dadurch gekennzeichnet, dass**
die Leiteradernplatte (18) aus dem Aufnahmehohlraum (17) entnommen und gewendet einsetzbar ist, wobei eine erste Oberflächenseite der Leiteradernplatte (18) Rinnen (19) für Leiter mit einem ersten Querschnitt und eine zweite Oberflächenseite Rinnen (20) für Leiter mit einem zweiten Querschnitt besitzt.

7. Überspannungsschutzeinrichtung nach Anspruch 6,
**dadurch gekennzeichnet, dass**
sich die Rinnenform (19; 20) und die Querschnitte der Leiter unterscheiden.

## Claims

1. An overvoltage protection device with at least one overvoltage protection unit, composed of a substantially U-shaped base member (1) and a plug-in member (2) that can be fixed within the base member (1) and accommodates means for overvoltage protection, wherein insulated electrical conductors (8) on or in the base member (1) will be contacted by means of vampire or cutting clamps, and breakthroughs (3) are formed within the base member (1) for accommodating conductors,
wherein the breakthroughs (3) in the case of a plug connection are realized for inserting the electrical conductors (8) or in the case of a V connection are realized for pushing through the electrical conductors (8), and are exposed in an area (4) of the base member (1) which can be covered by the plug-in member (2) such that cutting surfaces (5) located at the bottom of the plug-in member (2) penetrate the conductor insulation (6) during the plug-in process and directly contact the respective conductor (8), wherein in the case of a plug connection, the breakthroughs (3) will be closed at a side of the plug-in part (2), and in the case of a V connection, the breakthroughs at the opposite side are freely designed,
**characterized in that**
in the base member (1), a reception cavity (17) for a conductor wire plate (18) is provided, wherein the conductor wire plate (18) has a formation of channel-like recesses (19) corresponding to the number of conductors.

2. An overvoltage protection device with at least one overvoltage protection unit, composed of a substantially U-shaped base member (1) and a plug-in member (2) that can be fixed within the base member (1) and accommodates means for overvoltage protection, wherein insulated electrical conductors (8) on or in the base member (1) will be contacted by means of vampire or cutting clamps, and breakthroughs (3) are formed within the base member (1) for accommodating conductors,
wherein the breakthroughs in the case of a plug connection are realized for inserting the electrical conductors (8) or in the case of a V connection are realized for pushing through the electrical conductors (8), and are exposed in an area (4) of the base member (1) which can be covered by the plug-in member (2), wherein in the case of a plug connection, the breakthroughs (3) will be closed at a side of the plug-in part (2), and in the case of a V connection, the breakthroughs at the opposite side are freely designed,
**characterized in that**
the base member (1) disposes of or accommodates a latching plate (12) or several latching webs, which have contact surfaces (13) pointing towards the plug-in member (2) as well as cutting surfaces (14) directed towards the conductors (8) such that the cutting surfaces (14) during pressing in or snapping in penetrate the conductor insulation (6) and contact the respective conductors (8) so that an electrical connection is established between the respective contact surfaces (13) and the respective conductor (8), and that in the base member (1), a reception cavity (17) for a conductor wire plate (18) is provided, wherein the conductor wire plate (18) has a formation of channel-like recesses (19) corresponding to the number of conductors.

3. The overvoltage protection device according to claim 2,
**characterized in that**
the base part (2), at its bottom, has conductive portions (16) corresponding with the contact surfaces (13) of the latching plate (12) or the latching webs in terms of position and direction.

4. The overvoltage protection device according to claim 1 or 2,
**characterized in that**
the conductor wire plate (18) supports the respective conductors (8) during the cutting-clamping contacting process.

5. The overvoltage protection device according to claim 1, 2 or 4,
**characterized in that**
the conductor wire plate (18) is formed as an insert part, and the channel-like recesses (19) have a shape adapted to the conductor cross-section.

6. The overvoltage protection device according to claim 5,
**characterized in that**
the conductor wire plate (18) can be withdrawn from the reception cavity (17) and is insertable in the turned state, wherein a first top surface side of the conductor wire plate (18) has channels (19) for conductors having a first cross-section, and a second top surface side has channels (20) for conductors having a second cross-section.

7. The overvoltage protection device according to claim 6,
**characterized in that**
the channel shape (19; 20) and the cross-sections of the conductors are different.

## Revendications

1. Dispositif de protection contre les surtensions comportant au moins un appareil de protection contre les surtensions, constitué par une partie formant socle (1) essentiellement en forme de U et par une partie enfichable (2) qui peut être fixée dans la partie formant socle (1) et qui reçoit des moyens de protection contre les surtensions,
dans lequel
des conducteurs électriques isolés (8) sont mis en contact à l'aide de prises Vampire ou bornes guillotines sur ou dans la partie formant socle (1), et des traversées (3) sont formées dans la partie formant socle (1) pour recevoir les conducteurs,
les traversées (3) sont réalisées en vue d'une insertion dans le cas d'un raccordement en dérivation ou sont réalisées en vue d'un passage traversant dans le cas d'un raccordement en V des conducteurs électriques (8) et sont à découvert dans une zone (4) de la partie formant socle (1), qui peut être recouverte par la partie enfichable (2), de telle sorte que des surfaces de coupe (5) situées au fond de la partie enfichable (2) percent à travers l'isolation des conducteurs (6) pendant l'opération d'enfichage et entrent directement en contact avec le conducteur (8) respectif,
dans le cas d'un raccordement en dérivation, les traversées (3) sont refermées sur un côté de la partie enfichable (2), et
dans le cas d'un raccordement en V, les traversées sont conçues librement sur les côtés opposés,
**caractérisé en ce que**
une cavité de réception (17) pour une plaque à fils conducteurs (18) est prévue dans la partie formant socle (1),
la plaque à fils conducteurs (18) présente une disposition d'évidements (19) en forme de rainures dont le nombre correspond à celui des conducteurs.

2. Dispositif de protection contre les surtensions comportant au moins un appareil de protection contre les surtensions, constitué par une partie formant socle (1) essentiellement en forme de U et par une partie enfichable (2) qui peut être fixée dans la partie formant socle (1) et qui reçoit des moyens de protection contre les surtensions,
dans lequel
des conducteurs électriques isolés (8) sont mis en contact à l'aide de prises Vampire ou bornes guillotines sur ou dans la partie formant socle (1), et des traversées (3) sont formées dans la partie formant socle (1) pour recevoir les conducteurs,
les traversées (3) sont réalisées en vue d'une insertion dans le cas d'un raccordement en dérivation et sont réalisées en vue d'un passage traversant dans le cas d'un raccordement en V des conducteurs électriques (8) et sont à découvert dans une zone (4) de la partie formant socle (1), qui peut être recouverte par la partie enfichable (2),
dans le cas d'un raccordement en dérivation, les traversées (3) sont refermées sur un côté de la partie enfichable (2), et
dans le cas d'un raccordement en V, les traversées sont conçues librement sur les côtés opposés,
**caractérisé en ce que**
la partie formant socle (1) possède ou reçoit une plaque d'enclenchement (12) ou plusieurs barrettes d'enclenchement qui présentent des surfaces de contact (13) dirigées vers la partie enfichable (2) et des surfaces de coupe (14) dirigées vers les conducteurs (8),
de telle sorte que lors du pressage ou de l'enclenchement, les surfaces de coupe (14) traversent l'isolation (6) des conducteurs et viennent en contact avec les conducteurs respectifs (8),
de telle sorte qu'une connexion électrique est établie entre les surfaces de contact respectives (13) et le conducteur respectif (8),
et **en ce que**
une cavité de réception (17) pour une plaque à fils conducteurs (18) est prévue dans la partie formant socle (1),
la plaque à fils conducteurs (18) présente une disposition d'évidements (19) en forme de rainures dont le nombre correspond à celui des conducteurs.

3. Dispositif de protection contre les surtensions selon la revendication 2,
**caractérisé en ce que**
la partie enfichable (2) possède sur son fond des portions conductrices (16) qui, quant à la position et à la direction, correspondent aux surfaces de contact (13) de la plaque d'enclenchement (12) ou aux barrettes d'enclenchement.

4. Dispositif de protection contre les surtensions selon la revendication 1 ou 2,
**caractérisé en ce que**
la plaque à fils conducteurs (18) supporte les conducteurs électriques respectifs (8) lors de l'opération de coupe et de serrage et de mise en contact.

5. Dispositif de protection contre les surtensions selon la revendication 1, 2 ou 4,
**caractérisé en ce que**
la plaque à fils conducteurs (18) est réalisée sous forme pièce insert, et les évidements (19) en forme de rainures possèdent une forme adaptée à la section transversale des conducteurs.

6. Dispositif de protection contre les surtensions selon la revendication 5,
**caractérisé en ce que**
la plaque à fils conducteurs (18) peut être enlevée de la cavité de réception (17) et être repositionnée en étant retournée, un premier côté de surface de la plaque à fils conducteurs (18) possédant des rainures (19) pour des conducteurs ayant une première section transversale et un second côté de surface possédant des rainures (20) pour des conducteurs ayant une seconde section transversale.

7. Dispositif de protection contre les surtensions selon la revendication 6,
**caractérisé en ce que**
la forme des rainures (19; 20) et les sections transversales des conducteurs diffèrent les unes des autres.
